# EUROPÄISCHE PATENTANMELDUNG

(11) **EP 1 430 942 A1**
(43) Veröffentlichungstag der Anmeldung: **23.06.2004**
(21) Anmeldenummer: 03028427.7
(22) Anmeldetag: 11.12.2003
(51) Int. Cl.: B01D 39/12

(54) **Filtermaterial, Filterkörper und Verfahren zum Herstellen des Filtermaterials**

(30) Priorität: 18.12.2002 DE 10259654
(71) Anmelder: GKD Gebr. Kufferath AG, 52353 Düren (DE)
(72) Erfinder: Wirtz, Peter, 52353 Düren (DE)
(74) Vertreter: Patentanwaltskanzlei Liermann-Castell

(57) **Zusammenfassung**

Um ein Filtermaterial, welches aus sich überdeckenden Gitterelementen zusammensetzt ist, weiterzuentwickeln, schlägt die Erfindung ein Filtermaterial aus zwei sich überdeckenden Gitterelementen vor, bei welchem die Gitterelemente untereinander eine Schweißverbindung aufweisen.

## Beschreibung

Die Erfindung betrifft zum einen ein Filtermaterial aus zwei sich überdeckenden Gitterelementen und einen Filterkörper sowie zum anderen ein Verfahren zum Herstellen eines Filtermaterials aus mehreren Gitterelementen.

Filtermaterialien, die aus zwei sich überdeckenden Gitterelementen bestehen, sind in vielfältiger Weise aus dem Stand der Technik bekannt. Um die einzelnen Gitterelemente großflächig miteinander zu verbinden, werden die einzelnen Gitterelemente batchweise über einen längeren Zeitraum gesintert. Hierbei gehen die einzelnen Gitterelemente in ihren gemeinsamen Kontaktbereichen eine innige Verbindung zueinander ein, so dass die Gitterelemente zuverlässig zu einem mehrschichtigen Filtermaterial zusammen gefügt sind.

Nachteilig bei den durch Sintern hergestellten Filtermaterialien ist es, dass der Sintervorgang der Gitterelemente nur batchweise erfolgt und dadurch relativ aufwendig ist. Darüber hinaus ist es nachteilig, dass eine Sinterverbindung große Kontaktflächen benötigt, um eine ausreichend feste Verbindung zwischen einzelnen Bauteilen zu gewährleisten. Im Falle der Gitterelemente des Filtermaterials bedeutet dies jedoch, dass große Flächen der Gitterelemente durch die Sinterverbindung belegt und als Filterfläche verloren gehen.

Die Aufgabe der Erfindung besteht darin, die Nachteile der bekannten Filtermaterialien zu eliminieren und die Filtermaterialien weiterzuentwickeln.

Die Aufgabe der vorliegenden Erfindung wird von einem Filtermaterial aus zwei sich überdeckenden Gitterelementen gelöst, bei welchen die Gitterelemente untereinander eine Schweißverbindung aufweisen.

Es ist hierbei entgegen der bisherigen Auffassung gelungen, zwei Gitterelemente derart miteinander zu verschweißen, dass bei dem Schweißvorgang die eigentliche Gitterstruktur der Gitterelemente weitestgehend nicht zerstört wird und dadurch die Filterfunktion des erfindungsgemäßen Filtermaterials nicht negativ beeinträchtigt wird. Es hat sich darüber hinaus gezeigt, dass es für eine feste Verbindung der einzelnen Gitterelemente ausreicht, wenn die einzelnen Gitterelemente punktuell verschweißt werden. Durch das punktuelle Verschweißen erhöht sich zum einen die brauchbare Filterfläche und zum anderen die Flexibilität, mit welcher das erfindungsgemäße Filtermaterial gegenüber herkömmlichen Filtermaterialien geformt werden kann.

In vorliegenden Zusammenhang versteht man unter dem Begriff "Filtermaterial" ein Material, das in einem bestimmten Grad durchlässig ist oder eine besonders strukturierte Oberfläche aufweist, um eine Filterfunktion wahrnehmen zu können. Die Erfindung erstreckt sich jedoch auch auf Materialien, die zwar ähnlich aussehen, aber nicht für das Filtrieren verwendet werden. Derartige Materialien werden als Wandelemente, Verkleidungen, Windbremsen oder im Hinblick auf ihre akustischen Eigenschaften eingesetzt.

Unter "Gitterelement" werden Materialien verstanden, die auf Grund ihrer Struktur eine gewisse Porosität aufweisen.

Der Begriff "Schweißverbindung" umfasst hierbei Verbindungen, bei denen ein Werkstoff im Gegensatz zum Sintern bis über seinen Schmelzpunkt heraus erhitzt wird und bis zur Schmelze erhitzte Werkstoffe im Bereich ihrer Schmelze miteinander verschmelzen. Bisher wurden die Werkstoffe derartiger Gitterelemente in einem Sinterverfahren nur weniger stark erhitzt als bei einem Schweißverfahren.

Durch die Möglichkeit die Gitterelemente in einem Schweißprozess zu einem Filtermaterial zu verschweißen, können die Gitterelemente nunmehr auch zu einer Materialbahn verschweißt werden, bei welcher das eigentliche Filtermaterial eine Materialbahn mit einer Länge von mehr als sechs Metern, vorzugsweise von mehr als zwölf Metern, ist. Insbesondere können die Gitterelemente zu einem beliebig langen, wie beispielsweise einem zwanzig Meter langen Filtermaterial verschweißt werden.

Demzufolge ist es nunmehr möglich, ein Filtermaterial, welches aus sich überdeckenden Gitterelementen besteht, in Art einer Endlosmaterialbahn herzustellen, so dass auf ein mittels eines Sintervorgangs batchweise hergestelltes Filtermaterial verzichtet werden kann. Hierdurch ergeben sich erhebliche wirtschaftliche Vorteile, da ein Filtermaterial mit zwei oder mehr verschweißten Gitterelementen wesentlich kostengünstiger herzustellen ist.

Um aus dem Filtermaterial hergestellte Filterkörper in vielfältiger Art und Weise herstellen zu können, ist es vorteilhaft, wenn die Materialbahn eine Breite von mehr als 0,5 m, vorzugsweise von mehr als 0,6 m, aufweist.

Um ein punktuelles Verschweißen der einzelnen Gitterelemente besonders effektiv vornehmen zu können, ist es vorteilhaft, wenn die Gitterelemente ungewalzt sind. Entgegen der bisherigen Praxis wurde überraschender Weise festgestellt, dass eine ausreichend feste Verbindung zwischen zwei sich überdeckenden Gitterelementen hergestellt werden kann, wenn lediglich die Gitterelemente an einigen wenigen Kontaktstellen miteinander verschweißt sind, anstatt großflächig miteinander versintert zu sein.

In diesem Zusammenhang hat es sich als vorteilhaft erwiesen, wenn die Gitterelemente strukturelle Erhebungen und Vertiefungen aufweisen und im Bereich der Anlagepunkte miteinander verschweißt sind.

Durch die vorhandenen Erhebungen sind die Gitterelemente vorteilhafter Weise nur an wenigen Kontaktstellen miteinander verbunden. Hierdurch ist es möglich, Schweißungen mit einem hohen Strom und einer kurzen Schweißdauer herzustellen, so dass hierdurch die Gitterstruktur der Gitterelemente größtenteils erhalten bleibt und lediglich nur im unmittelbaren Bereich der Schweißung selbst gegebenenfalls beeinträchtigt wird. Hierdurch bleibt die eigentliche Filterfunktion des Filtermaterials auch nach dem Verschweißen der Gitterelemente großflächig erhalten.

Darüber hinaus ist durch die Erhebungen sichergestellt, dass aneinander liegende Gitterelemente einen ausreichenden Abstand zueinander aufweisen und sich die Gitterelemente nicht gegenseitig ihre Öffnungen zudecken und hierbei verschließen.

Eine ausreichend feste Verbindung zwischen den Gitterelementen des Filtennaterials ist schon gewährleistet, wenn das Filtermaterial pro 0,5 cm² mehr als eine Schweißverbindung aufweist.

Je nach Struktur der sich überdeckenden Gitterelemente ist es vorteilhaft, wenn das Filterelement pro cm² mehr als 5 Schweißverbindungen, vorzugsweise mehr als 20 Schweißverbindungen, aufweist.

Die Anzahl der Schweißverbindungen lässt sich baulich besonders einfach variieren, wenn wenigstens ein Gitterelement zwischen 5 oder 10 und 1500 oder 1200 Fäden pro cm aufweist.

Eine Ausführungsvariante sieht vor, dass die sich überdeckenden Gitterelemente eine voneinander verschiedene Struktur aufweisen. Wenigstens zwei miteinander verschweißte Gitterelemente, die eine voneinander verschiedene Struktur aufweisen, verleihen dem Filtermaterial eine besonders gute Stabilität.

Eine bevorzugte Ausführungsvariante sieht vor, dass ein Gitterelement feiner ist als ein weiteres Gitterelement. Hierbei bildet das feinere Gitterelement auf Grund der feineren Struktur eine Art Filtereinrichtung des Filtermaterials und das gröbere Gitterelement bildet dementsprechend eine Art Stützeinrichtung des Filterelements.

Es hat sich als vorteilhaft erwiesen, wenn ein Gitterelement Öffnungen mit einem Durchmesser von mehr als 5 mm, vorzugsweise mit einem Durchmesser von mehr als 20 mm, und Fäden mit einem Durchmesser von über 2 mm aufweist. Ein solches Gitterelement eignet sich baulich besonders gut als eine Art Stützeinrichtung.

Damit das Filtermaterial darüber hinaus gute Filtereigenschaften aufweist, ist es vorteilhaft, wenn ein Gitterelement Öffnungen mit einem Durchmesser von 5 mm oder weniger, vorzugsweise von weniger als 2 mm, aufweist. In einigen Anwendungsfällen kann der Durchmesser der Öffnungen bis auf einen Wert von 0,005 mm reduziert sein.

Ein Filtermaterial mit einem groben Gitterelement kann besonders einfach realisiert werden, wenn das Gitterelement ein Streckmetall ist.

Als feines Gitterelement des Filtermaterials eignet sich demgegenüber ein Gewebe besonders gut, da mit einem Gewebe Öffnungen mit einem Durchmesser von unter 2 mm besonders einfach hergestellt werden können.

Um ein Filtermaterial aus mehreren Lagen herzustellen und hierdurch die Filtereigenschaften zu variieren, ist es vorteilhaft, wenn das Filtermaterial mehr als zwei sich überdeckende Gitterelemente aufweist.

Eine besonders bevorzugte Ausführungsvariante eines Filtennaterials sieht vor, dass ein Gitterelement mit einer gröberen Struktur zwischen zwei Gitterelementen mit einer feineren Struktur angeordnet ist. Hierbei stützt das Gitterelement der gröberen Struktur die beiden Gitterelemente der feineren Struktur, so dass sich insgesamt hierdurch ein sehr steifes Filtermaterial ergibt. Die feinen Gitterelemente bestehen hierbei vorzugsweise aus einem Gewebe und das gröbere Gitterelement ist vorzugsweise ein Streckmetall.

In der Regel bestehen die einzelnen Gitterelemente aus identischen Werkstoffen. Es ist darüber hinaus auch möglich, dass die sich überdeckenden Gitterelemente aus unterschiedlichen Werkstoffen bestehen. Beispielsweise besteht ein Streckmetall aus einem nichtrostenden Edelstahl und ein an das Streckmetall geschweißtes Gewebe aus einem Titan-Werkstoff.

Damit sich überdeckende Gitterelemente eines Filtermaterials, insbesondere im Seitenbereich des Filtermaterials besonders haltbar verbunden werden können, ist es vorteilhaft, wenn das Filterelement eine Schweißbördelnaht aufweist. Außerdem werden beispielsweise zwei Gitterelemente, zwischen denen zumindest in einem zentralen Bereich ein weiteres Gitterelement angeordnet ist, durch eine derartige Bördelnaht in den Seitenbereichen zusammengehalten. Darüber hinaus lässt sich ein geformtes Filtermaterial besonders gut an der Schweißbördelnaht zu einem Filterkörper verschweißen.

Es ist ebenfalls vorteilhaft, wenn zwischen zwei Gitterelementen Abstandshalter angeordnet sind. Hierdurch wird ein Filtermaterial bereitgestellt, welches wenigstens bereichsweise einen Leerraum zwischen den einzelnen Gitterelementen aufweist. Somit wird dem Filtermaterial auf einfache Art und Weise ein gewisses "Volumen" verliehen, wodurch dem Filtermaterial je nach Anwendungsgebiet besonders gute Filtereigenschaften verliehen werden.

Es ist möglich, dass derartige Abstandshalter bereits von den miteinander verschweißten Gitterelementen geklemmt werden. Hierzu können die Gitterelemente in ihren Seitenbereichen durch eine Schweißbördelnaht vorteilhaft miteinander verschweißt werden.

Um ein Verschieben der Abstandshalter jedoch sicher zu vermeiden, ist es vorteilhaft, wenn die Abstandshalter mit den Gitterelementen verschweißt sind.

Ein großflächiges Filtermaterial, welches darüber hinaus besonders steif ist, kann vorteilhafter Weise realisiert werden, wenn ein Filtermaterial zwei Gitterelemente mit einer feinen Struktur aufweist, die jeweils mit Gitterelementen mit einer gröberen Struktur verschweißt sind und zwischen den Gitterelementen mit den gröberen Strukturen Abstandshalter angeordnet sind.

Einen sauberen seitlichen Randabschluss erhält das Filtermaterial, wenn das Filtermaterial in Richtung seiner Längsachse in den Randbereichen einen Blechstreifen aufweist.

Um das Filtermaterial besonders einfach weiterverarbeiten zu können, ist es vorteilhaft, wenn der Blechstreifen eine Breite unter 100 mm, vorzugsweise unter 20 mm, aufweist. Durch einen derartigen Blechstreifen erhält das Filtennaterial eine zusätzliche Steifigkeit.

Das Filtermaterial kann im Bereich der Blechstreifen besonders gut verschweißt werden, wenn darüber hinaus der Blechstreifen zumindest teilweise über wenigstens einem Gitterelement übersteht.

Es hat sich gezeigt, dass ein Filtermaterial zu einem Filterkörper vorteilhaft verarbeitet ist, wenn zwei Blechstreifen miteinander verschweißt sind.

In diesem Zusammenhang ist es darüber hinaus vorteilhaft, wenn das Filtermaterial einen Rahmen aufweist. Ein Rahmen verleiht dem Filtermaterial einen rundum vorteilhaften Abschluss, so dass eventuell scharfe Kanten an den Rändern der miteinander verschweißten Gitterelemente vermieden werden können. Hierdurch sinkt insbesondere das Verletzungsrisiko beim Weiterverarbeiten des Filtermaterials.

Darüber hinaus kann die Gefahr eines Durchschweißens eines Gitterelements im Bereich des Rahmens verringert und hierdurch die Wahrscheinlichkeit einer unerwünschten Lochbildung an einem Gitterelement verringert werden. Gleiches gilt natürlich auch in Bereichen, in welchen ein Blechstreifen ein Gitterelement überlappt.

Besonders vorteilhaft ist es, wenn der Rahmen zumindest teilweise zwischen zwei Gitterelementen angeordnet ist. So wird der Rahmen zumindest teilweise von zwei Gitterelementen umbaut. Dadurch kann der Rahmen mit den sich überdeckenden Gitterelementen eine Schweißverbindung eingehen.

Darüber hinaus wird die Aufgabe der Erfindung von einem Filterkörper gelöst, welcher das vorstehend beschriebene Filtermaterial aufweist. Da das erfindungsgemäße Filtermaterial gegenüber herkömmlichem Filtermaterial weniger Schweißverbindungen aufweist, ist das erfindungsgemäße Filtermaterial besonders gut formbar.

Besonders vorteilhaft ist es, wenn der Filterkörper ein Filterrahmen, eine Filterplatte, ein U-Profil-Filter, ein Filterring und/oder ein Filterzylinder ist. Hierdurch ist das Filtermaterial sehr vielseitig einsetzbar.

Des Weiteren wird die Aufgabe der Erfindung von einem Verfahren zum Herstellen eines Filtermaterials aus mehreren Gitterelementen gelöst, bei welchem die Gitterelemente miteinander verschweißt werden. Durch das Verschweißen der Gitterelemente zu einem Filtermaterial werden wesentliche wirtschaftliche Vorteile erzielt, da Gitterelemente durch Schweißen wesentlich schneller miteinander verbunden werden, als dies mit herkömmlichen Sinterverfahren der Fall ist.

Besonders wirtschaftlich lässt sich ein Filtermaterial herstellen, wenn die Gitterelemente zu einer Endlos-Materialbahn verschweißt werden. Dies ist bisher nicht möglich, da die bekannten Filtermaterialbahnen in Sinteröfen hergestellt werden und deshalb in ihren Abmessungen sehr begrenzt sind.

Damit ein ausreichend guter Kontakt beim Schweißvorgang zwischen den Kontaktstellen der Gitterelemente erzielt wird, ist es vorteilhaft, wenn die Gitterelemente beim Verschweißen mit einem Druck von mehr als 30 bar, vorzugsweise von mehr als 50 bar, aneinander gepresst werden. Es gibt Anwendungsfälle, bei denen der Anpressdruck bis über 90 bar angehoben wird.

Darüber hinaus hat es sich als vorteilhaft erwiesen, wenn die Gitterelemente mit einem Schweißimpuls von unter 10 Millisekunden oder von unter 5 Millisekunden, vorzugsweise mit etwa 2 Millisekunden, verschweißt werden. Ein Schweißimpuls von einer derart geringen Dauer ist vorteilhaft, da hierdurch die Strukturen der Gitterelemente im Wesentlichen großflächig erhalten bleiben. Vorteilhafter Weise wird hierdurch die Struktur der Gitterelemente durch Anschmelzen des Materials lediglich im unmittelbaren Bereich der Schweißstellen verändert.

Um den Druck auf die Gitterelemente und darüber hinaus den Schweißstrom auf die Gitterelemente aufbringen zu können, ist es vorteilhaft, wenn die Gitterelemente zum Verschweißen mit wenigstens einem Schweißstempel gegeneinander gepresst werden.

Eine Verfahrensvariante sieht vor, dass das Filtermaterial mit Blechelementen versehen und die Blechelemente miteinander verschweißt werden, so dass sich aus dem Filtermaterial ein zylindrischer Filterkörper ergibt.

Weitere Vorteile, Ziele und Eigenschaften vorliegender Erfindung werden anhand der Beschreibung anliegender Zeichnung erläutert, in welcher beispielhaft Filtermaterialien dargestellt sind.

Es zeigt
- Figur 1: ein erstes Gitterelement, welches relativ grobe Kett- und Schussfäden sowie eine relativ grobe Maschenweite aufweist,
- Figur 2: ein weiteres Gitterelement, welches gegenüber dem ersten Gitterelement aus der Figur 1 feinere Kett- und Schussfäden sowie eine kleinere Maschenweite aufweist,
- Figur 3: schematisch einen Querschnitt eines dreilagigen Filtermaterials aus verschiedenen Gitterelementen,
- Figur 4: schematisch eine Draufsicht auf eine Filtermaterialbahn mit einer Bördelnaht,
- Figur 5: schematisch einen Querschnitt eines vierlagigen Filtermaterials mit identischen Gitterelementen,
- Figur 6: schematisch einen Querschnitt eines weiteren vierlagigen Filtermaterials mit Abstandshaltern,
- Figur 7: schematisch eine Seitenansicht auf einen Filterzylinder aus einen zweilagigen Filtermaterial mit seitlich angeordneten Blechstreifen,
- Figur 8: schematisch eine Draufsicht auf den Filterzylinder aus der Figur 7 und
- Figur 9: schematisch eine Detailansicht der zusammenstoßenden Blechstreifen des Filterzylinders aus den Figuren 7 und 8.

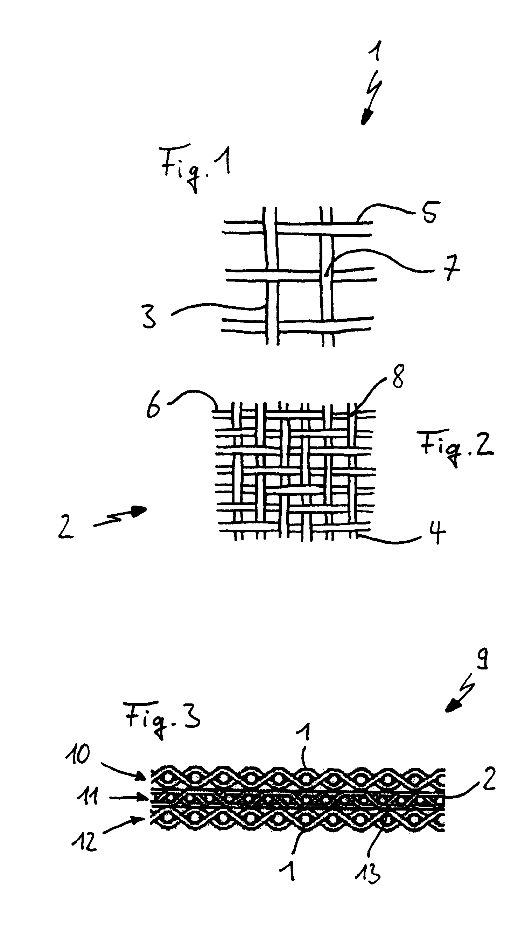

Die Figuren 1 und 2 zeigen jeweils ein Gitterelement 1 und 2, das jeweils aus einer Vielzahl von Kettfäden 3 und 4 sowie aus einer Vielzahl an Schussfäden 5 und 6 besteht.

Die Fäden 3 und 5 des Gitterelementes 1 haben einen größeren Durchmesser und sind darüber hinaus enger miteinander verwebt, so dass das Gitterelement 1 gegenüber dem Gitterelement 2 eine wesentlich gröbere Maschenweite aufweist.

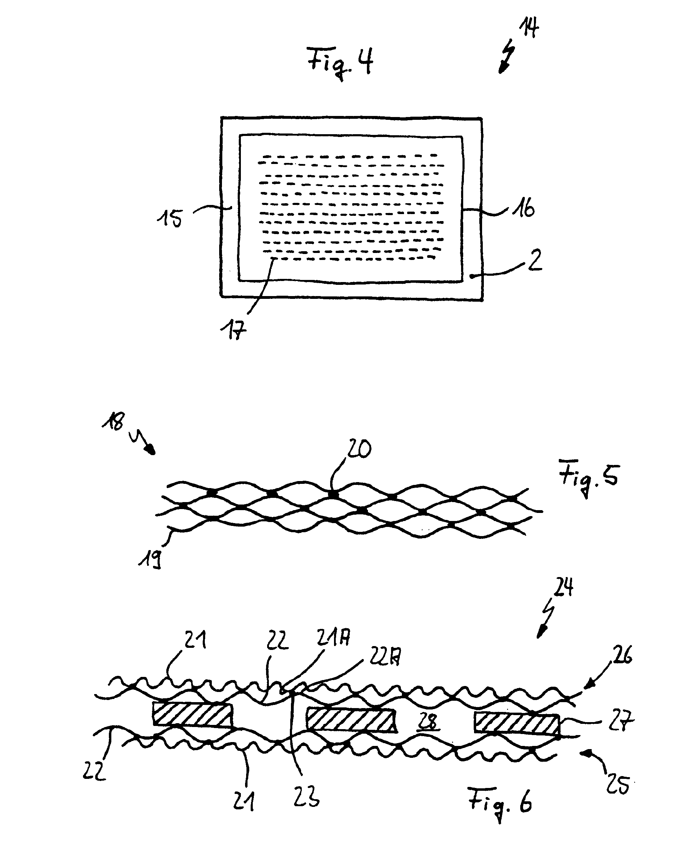

Beide Gitterelemente 1 und 2 sind ungewalzt, so dass die Gitterelemente 1 und 2 an den sogenannten "Knotenpunkten" 7 und 8 (hier jeweils nur exemplarisch einmal beziffert) gegenüber den übrigen Bereichen der Gitterelemente 1 und 2 erhöht sind. Werden die Gitterelemente 1 und 2 flächig aufeinander gelegt, berühren sie sich im Wesentlichen lediglich in den Bereichen ihrer Knotenpunkte 7 und 8, an denen sie dann vorteilhaft zu einem Filtermaterial 9 (siehe Figur 3) verschweißt werden können.

Das Filtermaterial 9 besteht in diesem Ausführungsbeispiel aus drei sich überdeckenden Gitterelementen 1 und 2, wobei an dem feineren Gitterelement 2 beidseitig jeweils ein gröberes Gitterelement 1 angebracht ist.

Das Filtermaterial 9 erhält somit eine robuste Schutzschicht 10, hinter welcher die eigentliche Filterschicht 11 angeordnet ist. Um dem Filtermaterial 9 darüber hinaus eine sehr gute Stabilität zu verleihen, ist an der Filterschicht 11 zusätzlich eine Drainageschicht 12 angeordnet, so dass die feinere Filterschicht 11 zum einen von der Schutzschicht 10 und zum anderen von der Drainageschicht 12 umgeben ist.

Da die Gitterelemente 1 und 2 nicht gewalzt sind, liegen die einzelnen Schichten 10, 11 und 12 nicht platt aufeinander, so dass die Schichten 10 und 12 lediglich an einigen wenigen Kontaktstellen (hier nur exemplarisch beziffert) miteinander verbunden sind.

Dadurch, dass sich die einzelnen Schichten 10, 11 und 12 lediglich an einigen wenigen Kontaktstellen 13 berühren, ist es möglich, die Schichten 10, 11 und 12 durch ein Schweißverfahren miteinander zu verschweißen, da die Gitterelemente nur an den wenigen Kontaktstellen 13 angeschmolzen werden und nur dort ihre eigentliche Struktur verlieren.

Entgegen der bisherigen Auffassung wurde gefunden, dass es ausreicht, verschiedene Gitterelemente 1 und 2 lediglich an einigen wenigen Kontaktstellen 13 miteinander zu verschweißen, um ein robustes Filtermaterial 9 herzustellen.

Zum einen wird mit dem erfindungsgemäß verschweißten Filtermaterial 9 gegenüber herkömmlichen Sinterverfahren jeweils ein Walzvorgang hinsichtlich der Gitterelemente 1 und 2 eingespart. Der Walzvorgang ist bei herkömmlichen Herstellverfahren notwendig gewesen, um zwischen einzelnen Gitterelementen 1 und 2 eine große weitflächige Kontaktfläche für den Sintervorgang herzustellen.

Zum anderen kann das erfindungsgemäße Filtermaterial 9 im Gegensatz zum herkömmlichen Filtermaterial als Endlosmaterialbahn hergestellt werden und ist dementsprechend günstiger herzustellen als herkömmliches Filtermaterial in einem Sinterprozess.

Das in der Figur 4 gezeigte Filtermaterialsegment 14 besteht aus zwei feinen Gitterelementen 2 zwischen denen ein gröberes Gitterelement 1 gelegt ist. Das gröbere Gitterelement 1 ist in diesem Ausführungsbeispiel kleiner ausgebildet als die beiden feinen Gitterelemente 2, so dass beide feinen Gitterelemente 2 in ihrem Randbereich 15 unmittelbar aneinander anliegen und dort mittels einer Bördelnaht 16 ringsherum miteinander linienförmig verschweißt sind. Eine derartige Anordnung ermöglicht einen flachen Abschluss des Filtermaterialsegmentes 14 in dem Randbereich 15.

Das gröbere Gitterelement 1 ist mit den feineren Gitterelementen 2 an einer Vielzahl an Schweißstellen 17 miteinander verschweißt, so dass die einzelnen Gitterelemente 1 und 2 sehr innig zu einem kompakten Filtermaterialsegment 14 verbunden sind.

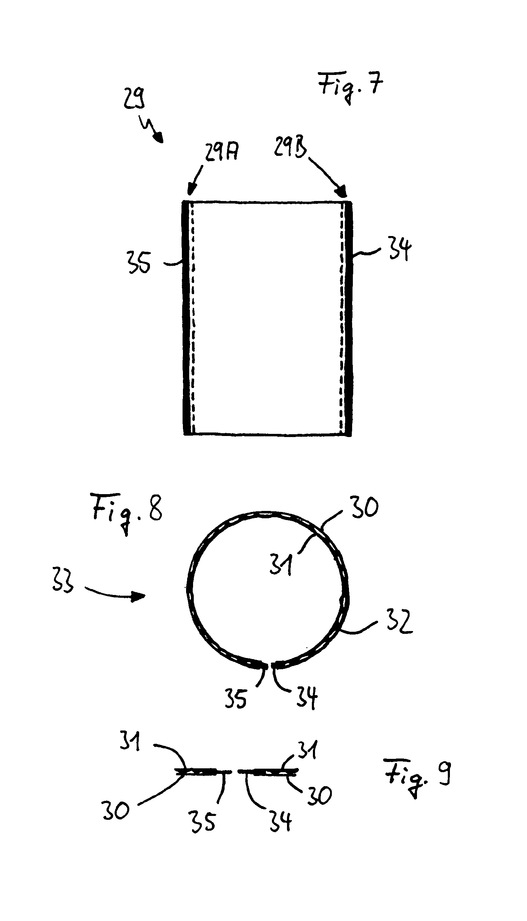

Das in Figur 5 gezeigte Filtermaterial 18 besteht aus im Wesentlichen vier identischen Gitterelementen 19, die übereinandergeschichtet angeordnet sind. Die Gitterelemente 19 weisen hierbei einen sinusartigen Verlauf auf, so dass die Gitterelemente 19 im Wesentlichen im Bereich ihrer Erhebungen 20 miteinander verschweißt sind. Hierdurch ergibt sich ein Filtermaterial 18, das lediglich an wenigen Kontaktstellen 13 (siehe Figur 3) miteinander verschweißt ist, ohne dass beim Schweißvorgang die Struktur der Gitterelemente 19 übermäßig stark in Mitleidenschaft gezogen wird. Lediglich im Bereich der verschweißten Erhebungen 20 wird das Material der Gitterelemente 19 angeschmolzen, so dass sich die einzelnen Gitterelemente 1 und 2 an diesen Stellen miteinander verbinden.

In der Figur 6 sind unterschiedlich stark ausgebildete Gitterstrukturen 21 und 22 an Erhebungen 21A und 22A mittels Schweißverbindungen 23 verbunden. Demnach entstehen die Schweißverbindungen 23 nur in den Bereichen, in welchen sich die Erhebungen 21A und 22A berühren. Das hierdurch hergestellte Filtermaterial 24 besteht insgesamt aus vier Gitterelementen 21 und 22. In diesem Ausführungsbeispiel bilden jeweils ein Gitterelement 21 und 22 eine Filtennateriallage 25 und 26 und die Filtermateriallagen 25 und 26 sind durch Abstandshalter 27 (hier nur exemplarisch beziffert) voneinander getrennt. Dadurch ist zwischen den einzelnen Filtermateriallagen 25 und 26 ein entsprechender Leerraum 28 (hier nur exemplarisch beziffert) vorhanden. Die Gitterelemente 22 im Inneren des Filtermaterials 24 weisen an ihren Erhebungen 22A eine Schweißverbindung gegenüber dem Abstandshalter 27 auf.

Das in der Figur 7 gezeigte Filtermaterialsegment 29 besteht aus einem feinen Gitterelement 30 und einem gröberen Gitterelement 31 (siehe Figur 8).

Das feinere Gitterelement 30 ist ein Gewebe und das gröbere Gitterelement 31 ist ein Streckmetall. Beide Gitterelemente 30 und 31 sind an überhöhten Bereichen 32 miteinander verschweißt.

Das Filtermaterialsegment 29 ist zu einem Filterzylinder 33 ausgeformt. Hierzu werden die seitlichen Randbereiche 29A und 29B des Filtermaterialsegmentes 29 jeweils mit einem Blechstreifen 34 und 35 versehen, an denen das Filtermaterialsegment 29 zu einem Filterzylinder 33 baulich besonders einfach verschweißt werden kann.

Damit die beiden Blechstreifen 34 und 35 zum einen mittels einer Stoßschweißnaht verbunden werden können und zum anderen das Filtermaterialsegment 29 zumindest in den Randbereichen 29A und 29B einen glatten Abschluss aufweist, sind die Blechstreifen 34 und 35 zwischen den miteinander verschweißten Gitterelementen 30 und 31 angeordnet.

Ein derart hergestellter Filterzylinder 33 ist besonders gut dazu geeignet, während einer späteren Anwendung den ursprünglich vorhandenen Durchmesser des Filterzylinders 33 auszuweiten. Hierdurch kann der Filterzylinder 33 während des Betriebs besonders einfach an veränderte Einsatzbedingungen angepasst werden. Ein solcher Anwendungsbereich liegt im Einsatzgebiet des sogenannten "Sand Control Sking".

## Patentansprüche

1. Filtermaterial (9; 18; 24) aus zwei sich überdeckenden Gitterelementen (1; 2; 30, 31) ***dadurch gekennzeichnet, dass*** die Gitterelemente (1; 2; 30, 31) untereinander eine Schweißverbindung (23) aufweisen.

2. Filtermaterial (9; 18; 24) nach Anspruch 1, ***dadurch gekennzeichnet, dass*** die Gitterelemente (1; 2; 30, 31) ungewalzt sind.

3. Filtermaterial (9; 18; 24) nach einem der Ansprüche 1 oder 2, ***dadurch gekennzeichnet, dass*** die Gitterelemente (1; 2; 30, 31) strukturelle Erhebungen (20; 21A; 22A) und Vertiefungen aufweisen und im Bereich der Anlagepunkte (20; 21A; 22A) miteinander verschweißt sind.

4. Filtermaterial (9; 18; 24) nach einem der Ansprüche 1 bis 4, ***dadurch gekennzeichnet, dass*** das Filtermaterial (9; 18; 24) pro 0,5 cm² mehr als eine Schweißverbindung (23) aufweist.

5. Filtermaterial (9; 18; 24) nach einem der Ansprüche 1 bis 5, ***dadurch gekennzeichnet, dass*** das Filtermaterial (9; 18; 24) pro 1,0 cm² mehr als 5 Schweißverbindungen (23), vorzugsweise mehr als 20 Schweißverbindungen (23), aufweist.

6. Filtermaterial (9; 18; 24) nach einem der Ansprüche 1 bis 5, ***dadurch gekennzeichnet, dass*** wenigstens ein Gitterelement zwischen 5 oder 10 und 1500 oder 1200 Fäden pro cm aufweist.

7. Filtermaterial (9; 18; 24) nach einem der Ansprüche 1 bis 6, ***dadurch gekennzeichnet, dass*** die sich überdeckenden Gitterelemente (1; 2; 30, 31) eine voneinander verschiedene Struktur aufweisen.

8. Filtermaterial (9; 18; 24) nach einem der Ansprüche 1 bis 7, ***dadurch gekennzeichnet, dass*** ein Gitterelement (1; 2; 30, 31) feiner ist als ein weiteres Gitterelement (1; 2; 30, 31).

9. Filtennaterial (9; 18; 24) nach einem der Ansprüche 1 bis 8, ***durch gekennzeichnet, dass*** ein Gitterelement (1; 2; 30, 31) Öffnungen mit einem Durchmesser von mehr als 5 mm, vorzugsweise mit einem Durchmesser von mehr als 20 mm, aufweist.

10. Filtermaterial (9; 18; 24) nach einem der Ansprüche 1 bis 9, ***dadurch gekennzeichnet, dass*** ein Gitterelement (1; 2; 30, 31) Öffnungen mit einem Durchmesser von 5,0 mm oder weniger, vorzugsweise von weniger als 2,0 mm, aufweist.

11. Filtermaterial (9; 18; 24) nach einem der Ansprüche 1 bis 10, ***dadurch gekennzeichnet, dass*** ein Gitterelement (1; 2; 30, 31) ein Gewebe (30) ist.

12. Filtermaterial (9; 18; 24) nach einem der Ansprüche 1 bis 11, ***dadurch gekennzeichnet, dass*** ein Gitterelement (1; 2; 30, 31) ein Streckmetall (31) ist.

13. Filtermaterial (9; 18; 24) nach einem der Ansprüche 1 bis 12, ***dadurch gekennzeichnet, dass*** ein Gitterelement (1; 2; 30, 31) mit einer gröberen Struktur zwischen zwei Gitterelementen (1; 2; 30, 31) mit einer feineren Struktur angeordnet ist.

14. Filtermaterial (9; 18; 24) nach einem der Ansprüche 1 bis 13, ***dadurch gekennzeichnet, dass*** das Filtennaterial (9; 18; 24) mehr als zwei sich überdeckende Gitterelemente (1; 2; 30, 31) aufweist.

15. Filtermaterial (9; 18; 24) nach einem der Ansprüche 1 bis 14, ***dadurch gekennzeichnet, dass*** die sich überdeckenden Gitterelemente (1; 2; 30, 31) aus unterschiedlichen Werkstoffen bestehen.

16. Filtermaterial (9; 18; 24) nach einem der Ansprüche 1 bis 15, ***dadurch gekennzeichnet, dass*** das Filtermaterial (9; 18; 24) eine Schweißbördelnaht (16) aufweist.

17. Filtennaterial (9; 18; 24) nach einem der Ansprüche 1 bis 16, ***dadurch gekennzeichnet, dass*** zwischen zwei Gitterelementen (1; 2; 30, 31) Abstandshalter (27) angeordnet sind.

18. Filtermaterial (9; 18; 24) nach Anspruch 17, ***dadurch gekennzeichnet, dass*** die Abstandshalter (27) mit den Gitterelementen (1; 2; 30, 31) verschweißt sind.

19. Filtermaterial (9; 18; 24) nach einem der Ansprüche 1 bis 18, ***dadurch gekennzeichnet, dass*** ein Filtermaterial (9; 18; 24) zwei Gitterelemente (1; 2; 30, 31) mit einer feinen Struktur aufweist, die jeweils mit Gitterelementen (1; 2; 30, 31) mit einer gröberen Struktur verschweißt sind und zwischen den Gitterelementen (1; 2; 30, 31) mit den gröberen Strukturen Abstandshalter (27) angeordnet sind.

20. Filtermaterial (9; 18; 24) nach einem der Ansprüche 1 bis 19, ***dadurch gekennzeichnet, dass*** das Filtermaterial (9; 18; 24) in Richtung seiner Längsachse in den Randbereichen (29A, 29B) einen Blechstreifen (34, 35) aufweist.

21. Filtermaterial (9; 18; 24) nach Anspruch 20, ***dadurch gekennzeichnet, dass*** der Blechstreifen (34, 35) eine Breite unter 100 mm, vorzugsweise unter 20 mm, aufweist.

22. Filtermaterial (9; 18; 24) nach einem der Ansprüche 20 oder 21, ***dadurch gekennzeichnet, dass*** der Blechstreifen (34, 35) zumindest teilweise über wenigstens einem Gitterelement (1; 2; 30, 31) übersteht.

23. Filtermaterial (9; 18; 24) nach einem der Ansprüche 20 bis 22, ***dadurch gekennzeichnet, dass*** zwei Blechstreifen (34, 35) miteinander verschweißt sind.

24. Filtermaterial (9; 18; 24) nach einem der Ansprüche 1 bis 23, ***dadurch gekennzeichnet, dass*** das Filtermaterial (9; 18; 24) einen Rahmen aufweist.

25. Filtermaterial (9; 18; 24) nach Anspruch 24, ***dadurch gekennzeichnet, dass*** der Rahmen zumindest teilweise zwischen zwei Gitterelementen (1; 2; 30, 31) angeordnet ist.

26. Filterkörper, ***dadurch gekennzeichnet, dass*** der Filterkörper ein Filtermaterial (9; 18; 24) nach einem der Ansprüche 1 bis 24 aufweist.

27. Filterkörper nach Anspruch 26, ***dadurch gekennzeichnet, dass*** der Filterkörper einen Filterrahmen, eine Filterplatte, ein U-Profil-Filter, ein Filterring oder ein Filterzylinder (33) ist.

28. Verfahren zum Herstellen eines Filtennaterials (9; 18; 24) aus mehreren Gitterelementen (1; 2; 30, 31), ***dadurch gekennzeichnet, dass*** die Gitterelemente (1; 2; 30, 31) miteinander verschweißt werden.

29. Verfahren nach Anspruch 28, ***dadurch gekennzeichnet, dass*** die Gitterelemente (1; 2; 30, 31) zu einer Endlos-Materialbahn verschweißt werden.

30. Verfahren nach Anspruch 28 oder 29, ***dadurch gekennzeichnet, dass*** die Gitterelemente (1; 2; 30, 31) beim Verschweißen mit einem Druck von mehr als 30 bar, vorzugsweise von mehr als 50 bar, aneinander gepresst werden.

31. Verfahren nach einem der Ansprüche 28 bis 30, ***dadurch gekennzeichnet, dass*** die Gitterelemente (1; 2; 30, 31) mit einem Schweißimpuls von unter 10 Millisekunden oder von unter 5 Millisekunden, vorzugsweise mit etwa 2 Millisekunden, verschweißt werden.

32. Verfahren nach einem der Ansprüche 28 bis 31, ***dadurch gekennzeichnet, dass*** die Gitterelemente (1; 2; 30, 31) zum Verschweißen mit wenigstens einem Schweißstempel gegeneinander gepresst werden.

33. Verfahren nach einem der Ansprüche 28 bis 32, ***dadurch gekennzeichnet, dass*** das Filtermaterial (9; 18; 24) mit Blechelementen versehen und die Blechelemente miteinander verschweißt werden, so dass sich aus dem Filtermaterial (9; 18; 24) ein zylindrischer Filterkörper ergibt.
